# EUROPÄISCHE PATENTSCHRIFT

(11) **EP 0 600 124 B1**
(45) Veröffentlichungstag und Bekanntmachung des Hinweises auf die Patenterteilung: **10.07.1996**
(21) Anmeldenummer: 92120711.4
(22) Anmeldetag: 04.12.1992
(51) Int. Cl.: B60R 1/06

(54) **Spiegelglashaltevorrichtung für einen Kfz-Aussenspiegel**
Outer mirror retaining device for a vehicle
Dispositif de retenue pour un rétroviseur extérieur d'un véhicule

(43) Veröffentlichungstag der Anmeldung: 08.06.1994
(73) Patentinhaber: HOHE KG, D-97903 Collenberg (DE)
(72) Erfinder: Polzer, Herwig, W-8760 Miltenberg (DE); Poignand, Louis, F-57290 Fameck (FR)
(74) Vertreter: Zinngrebe, Horst, Dr.rer.nat.

(56) Entgegenhaltungen:
- EP-A- 0 099 216
- BE-A- 665 046
- DE-A- 3 144 547
- DE-B- 2 113 782

## Beschreibung

Die Erfindung betrifft eine Vorrichtung zum Befestigen eines Spiegelglases auf der Vorderseite einer Trägerplatte, aus deren Rückseite mehrere beabstandete erste Rastelemente vorstehen und welche rückseitig mit dem Spiegelgehäuse eines Kfz-Außenspiegels verbindbar ist.

Bei einer Beschädigung des Spiegelglases eines Kfz-Außenspiegels ist es nach der DE-B-29 07 433 möglich, eine aus dem Spiegelglas und einer Trägerplatte bestehende Baugruppe von den übrigen Teilen des Außenspiegels zu lösen und durch eine neue gleichartige Baugruppe zu ersetzen. Diese Baugruppe kann auch eine zwischen Trägerplatte und Spiegelglas zwischengelegte Heizfolie umfassen, wobei etwa nach der DE-C-32 18 499 die Heizfolie auf die Rückseite des Spiegelglases und die Trägerplatte auf die Rückseite der Heizfolie jeweils aufgeklebt sind. Durch diese innige klebende Verbindung wird zwar eine kompakte Baugruppe gebildet, die sich nach langem Gebrauch jedoch nicht mehr in die Einzelteile zerlegen läßt und daher ein Entsorgungsproblem darstellt.

Nach der DE-A-31 44 547 und gemäß dem Oberbegriff des Anspruchs 1 ist eine mit einem Spiegelglas verbundene Trägerplatte rückseitig mit Haken und Zapfen versehen, welche mit spiegelgehäuseseitigen Gegenelementen zwecks Einrastung und Lagefixierung zusammenwirken. Auch bei diesem Außenspiegel tritt das oben erläuterte Entsorgungsproblem auf.

Der Erfindung liegt daher die Aufgabe zugrunde, eine Vorrichtung zum Befestigen eines Spiegelglases auf einer Trägerplatte zu schaffen, die einerseits während ihres Gebrauchs eine feste Baugruppe bildet und sich andererseits leicht entsorgen läßt.

Bei der eingangs genannten Vorrichtung ist dazu erfindungsgemäß ein den seitlichen Rand des Spiegelglases umfassender und mehrere beabstandete zweite Rastelemente aufweisender Ring vorgesehen, wobei jedes zweite Rastelement zum Zusammenwirken mit einem zugeordneten ersten Rastelement von dem Ring über einen biegbaren Steg radial absteht. Durch das Zusammenwirken der ersten und zweiten Rastelemente wird eine Baugruppe geschaffen, die den notwendigen festen Zusammenhalt während des Gebrauchs gewärleistet. Andererseits läßt sich die Baugruppe durch Aufbrechen der Rastverbindung unschwer in ihre Bestandteile auseinandernehmen und getrennt nach Kunststoffen, Metallteilen und Glas den dafür jeweils bestehenden Entsorgungswegen zuführen.

Die Erfindung wird nachstehend anhand der in der beigefügten Zeichnung dargestellten Ausführungsbeispiele im einzelnen beschrieben. Es zeigt:
- Fig. 1:: die Ansicht einer Trägerplatte in schematischer Darstellung von hinten mit angeformtem Ring;
- Fig. 2:: die schematische Ansicht eines Teil-Querschnitts längs der Linie A-A durch die Trägerplatte nach Fig. 1; und
- Fig. 3:: eine schematische Ansicht einer anderen Ausführungsform einer Trägerplatte mit Ring.

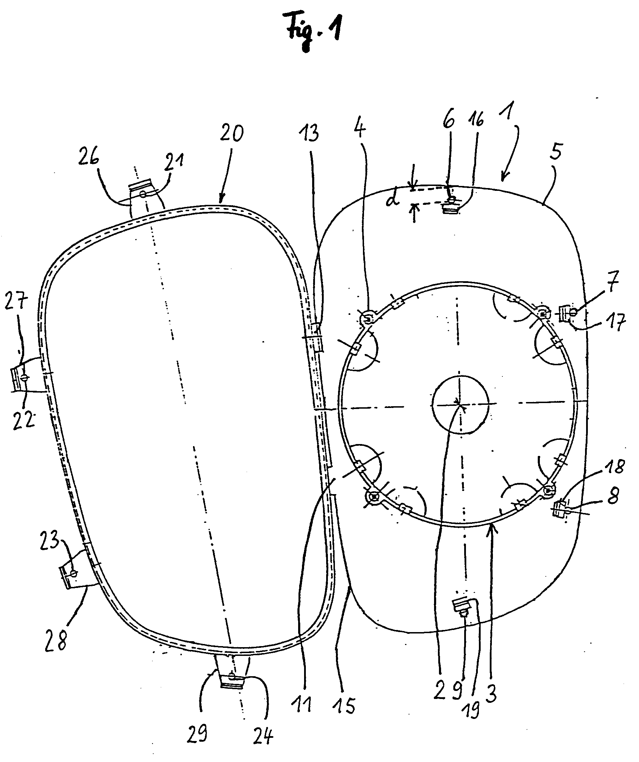

Die aus Kunststoff bestehende Trägerplatte 1 hat einen Umriß, der demjenigen der im einzelnen nicht dargestellten Spiegelglasscheibe gleicht. Auf der in Fig. 1 nicht zu erkennenden Vorderseite ist die Trägerplatte eben. Aus ihrer Rückseite erhebt sich konzentrisch zu ihrem Mittelpunkt 2 ein Ring 3, der mit Befestigungselementen, von denen eines mit 4 bezeichnet ist, zum Festklemmen an einem nicht dargestellten, mit einem Spiegelgehäuse verbundenen Träger versehen ist, wie das beispielsweise im einzelnen in der deutschen Patentschrift 29 07 433 erläutert ist.

In geringem Abstand d von der Begrenzungskante 5 der Trägerplatte 1 sind im dargestellten Ausführungsbeispiel vier beabstandete Zapfen 6, 7, 8, 9 aus dem Material der Trägerplatte 1 nach rückwärts vorstehend ausgeformt. Bezüglich der Kante 5 innerhalb jedes der Zapfen 6 ... 9 steht aus der Rückseite der Trägerplatte 1 ein Haken 16, 17, 18, 19 vor, der nach innen elastisch ist.

An dem bezüglich der beiden mittleren Zapfen 7, 8 gegenüberliegenden Randabschnitt 15 der Trägerplatte 1 ist über zwei Stege 11, 13 ein im ganzen mit 20 bezeichneter Ring angeformt. Von der Außenperipherie des Ringes 20 stehen, korrespondierend zu den Zapfen 6, 7, 8, 9, vier beabstandete Zungen 26, 27, 28, 29 radial nach außen ab. Jede dieser Zungen weist je einen Durchbruch 21, 22, 23, 24 von einem Durchmesser auf, der gleich dem Außendurchmesser des zugehörigen Zapfens 6, 7, 8, 9 an dessen Basis ist.

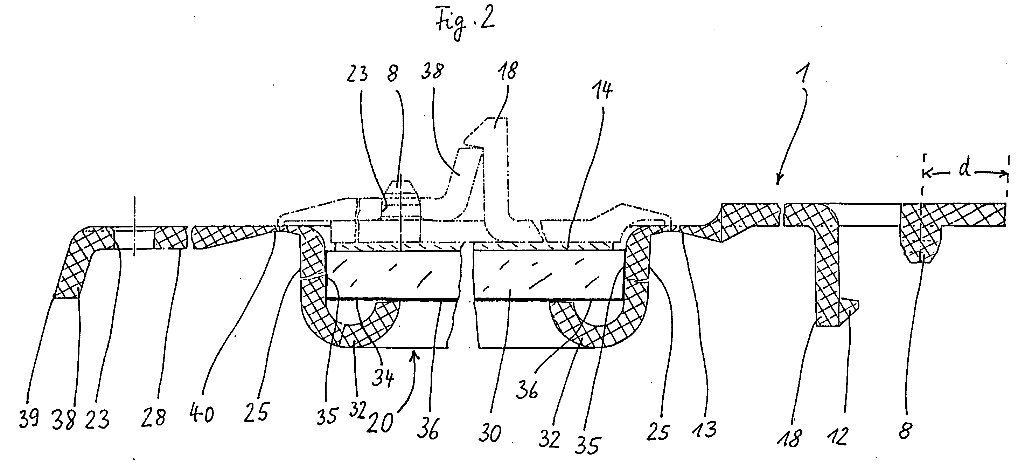

Gemäß Fig. 2 besitzt der Ring 20 einen umlaufenden Hauptteil 25, der sich als Wange an die unbearbeitete Seitenfläche 35 eines Spiegelglases 30 dicht anlegt. Die Umfangskontur des Hauptteils 25 gleicht daher dem Umriß des Spiegelglases 30. Der Hauptteil 25 läuft nach vorne in einem einwärts gerichteten Bogen 32 aus, der etwa um 180° gewendet ist und den Randbereich 34, 36 des Spiegelglases 30 überdeckt. Das freie Ende des Bogens 32 liegt dicht auf dem randnahen Bereich der Vorderfläche 36 des Spiegelglases 30 auf.

Der Ring-Hauptteil 25 geht an dem dem Bogen 32 gegenüberliegenden Ende nach radial außen an denjenigen Abschnitten, an denen eine der Zungen 26, 27, 28, 29 vorzusehen ist, über einen Steg 40 verminderter Materialstärke in die radial abstehende Zunge, beispielsweise die Zunge 28, über. Die Zunge 28 weist zunächst den Durchbruch 23 auf und läuft an ihrem freien Ende in eine schräg aufwärts in Richtung des Hauptteils 25 gebogene Nase 38 mit Außenkante 39 aus.

Wie aus Fig. 2 weiter ersichtlich, ist der Ring 20 unter anderem über den Steg 13 an die Tragplatte 1 angeformt, wobei der Steg 13 ähnlich wie der Steg 40 verminderte Materialstärke aufweist. Der Haken 18 besitzt an seinem freien Ende eine Verdickung 12, welche auf den Zapfen 8 zuweist.

Beim Zusammenbau wird in den Ring 20 die Spiegelglasscheibe 30 so eingelegt, daß der Hauptteil 25 die unbearbeiteten Seitenflächen 35 des Spiegelglases 30 elastisch anliegend umgibt. Die Spiegelscheibe 30 wird soweit in den Ring 20 eingedrückt, bis die freien Enden der Bogen 32 die Vorderseite 36 voll kontaktieren. Sodann kann auf die mit Reflexbelag beschichtete Rückseite des Spiegelglases eine Heizfolie 14 aufgelegt werden, deren elektrische Anschlüsse in Fig. 2 nicht dargestellt sind, durch geeignete Öffnungen in der Trägerplatte 1 jedoch unschwer durchführbar sind.

Sodann wird die Trägerplatte 1 gewendet, wobei die Stege 11, 13 sich um etwa 180° umbiegen, so daß die Trägerplatte die in Fig. 2 strichpunktiert eingezeigte Anlage an den Heizbelag 14 einnimmt. Schließlich werden die Zungen 26, 27, 28, 29 um 180° längs ihrer Stege 40 umgebogen und die Nasen 38 zum Einrasten hinter die Haken 18 gebracht. Nach dem Einrasten übergreift, wie Fig. 2 strichpunktiert zeigt, der Vorsprung 12 die Kante 39 der Nase 38, und der Zapfen 8 durchdringt die Öffnung 23. Durch das elastische Einrasten der Nase 38 hinter den Haken 18 wird die Trägerplatte 1 auf den Heizbelag 14 und die Spiegelglasplatte 30 aufgedrückt, so daß diese in innigem Flächenkontakt verbunden sind. Die Elastizität des Kunststoffs, aus dem die Trägerplatte 1 und der Ring 20 gefertigt sind, trägt dazu bei, im beschriebenen zusammengebauten Zustand eine kompakte Baugruppe aus Spiegelglas 30, Heizelement 14 und Trägerplatte 1 zu bilden, deren Bestandteile während des Gebrauchs fest zusammenhalten. Wird diese Baugruppe nicht mehr benötigt, kann durch Aufsprengen der Rastverbindung zwischen Nase 38 und Haken 18 sowie durch Befreien des Zapfens 8 aus dem Durchbruch 21 die Baugruppe geöffnet und die Kunststoffteile bestehend aus Trägerplatte 1 und Ring 20, die Metallteile bestehen im wesentlichen aus dem Heizelement 14 sowie das Spiegelglas 30 auseinander genommen und jeweils für sich einer gesonderten Entsorgung zugeführt werden.

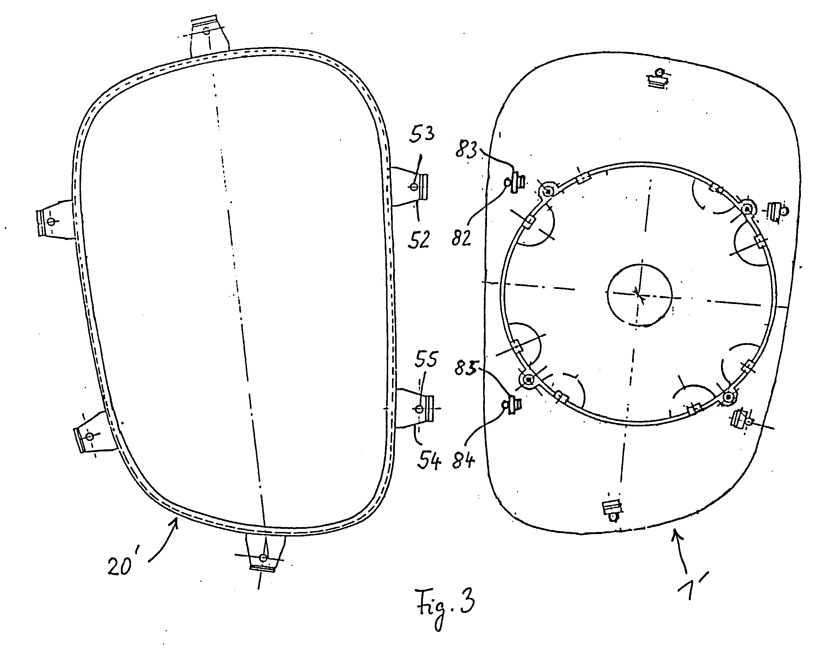

Die Erfindung ist nicht darauf beschränkt, daß der Ring 20 an die Tragplatte 1 über Stege 11, 13 angeformt ist. Fig. 3 zeigt einen Ring 20', der gegenüber der Tragplatte 1' ein separates Bauteil ist. Der Ring 20' weist einen dem Hauptteil 25 und Bogen 32 des Rings 20 entsprechendes Hauptteil mit angeformtem Bogen auf. Die Außenkontur seines Hauptteils ist dem Umriß einer Spiegelglasplatte angepaßt. Von seinem Hauptteil stehen bei dieser Ausführungsform der Erfindung auch an der Seite, an der sich am Ring 20 die Stege 11 und 13 befinden, weitere Zungen 52, 54 ab, die baugleich zu einer der Zungen 26 ... 29 ausgebildet und über dem Steg 40 entsprechende Stege verminderter Materialstege an den Hauptteil angeformt sind. Entsprechend besitzt die Trägerplatte 1' auf der Rückseite in Korrespondenz zu den Zungen 52, 54 Zapfen 82, 84, auf deren Innenseite je ein Haken 83, 85 aus der Rückseite der Tragplatte 1' vorsteht. Jeder der Haken 83, 85 ist konstruktiv gleich dem Haken 18. Beim Zusammenbau wird in den Ring 20' die Spiegelglasscheibe und gegebenenfalls nachfolgend der Heizbelag eingedrückt, so daß sich das Hauptteil des Rings 20' federnd und satt an den unbehandelten Rand der Spiegelglasscheibe anlegt. Alsdann wird auf die Rückseite des Spiegelglases beziehungsweise die Rückseite des auf dieses aufgelegten Heizbelages die Trägerplatte 1' aufgelegt. Sodann werden alle Zungen des Ringes 20' um 180° nach innen gebogen, so daß die Zapfen, beispielsweise die Zapfen 82, 84 der Trägerplatte 1' durch die Öffnungen, beispielsweise die Öffnungen 53, 55 in den Zungen 52, 54 hindurch treten und die Nasen der Zungen hinter die Vorsprünge der Haken einrastend greifen. Während die Spiegelglasbaugruppe nach dem vorstehend beschriebenen Ausführungsbeispiel aus drei Bauteilen, nämlich der Spiegelglasscheibe, dem Heizbelag und der Trägerplatte mit Ring besteht, wird die Spiegelglasbaugruppe nach der hier beschriebenen Abwandlung der Erfindung aus vier Bauteilen zusammengesetzt. Auch in dieser Ausführungsform läßt sich die Baugruppe durch Auftrennen der Einrastungen in ihre Einzelteile zerlegen.

Wie ersichtlich, bilden alle Nasen, die von der Rückseite der Trägerplatte 1 oder 1' abstehen, erste Rastelemente, die mit den jeweilig zugeordneten Nasen am Ring 20 oder 20' als zweite Rastelemente zusammenwirken. Selbstverständlich können auch anders geformte erste und zweite Rastelemente vorgesehen sein, die auf den um 180° einbiegbaren Zungen mit entsprechend geformten, aus der Rückseite der Trägerplatte vorstehenden ersten Rastelementen im Sinne der Erfindung zusammenwirken können.

## Patentansprüche

1. Vorrichtung zum Befestigen eines Spiegelglases (30) auf der Vorderseite einer Trägerplatte (1), aus deren Rückseite mehrere beabstandete erste Rastelemente (16 ... 19) vorstehen und welche rückseitig mit dem Spiegelgehäuse eines Kfz-Außenspiegels verbindbar ist, dadurch gekennzeichnet, daß ein den seitlichen Rand (35) des Spiegelglases (30) umfassender und mehrere beabstandete zweite Rastelemente (38) aufweisender Ring (20) vorgesehen ist, wobei jedes zweite Rastelement (38) zum Zusammenwirken mit einem zugeordneten ersten Rastelement (18) von dem Ring (20) über einen biegbaren Steg (40) radial absteht.

2. Vorrichtung nach Anspruch 1, dadurch gekennzeichnet, daß von der Rückseite der Trägerplatte (1) mehrere Zapfen (6 ... 9) abstehen und daß an den Ring (20) mehrere, den Zapfen (6 ... 9) zugeordnete Augen (21 ... 24) über je einen Steg (40) radial abstehend angeformt sind.

3. Vorrichtung nach Anspruch 2, dadurch gekennzeichnet, daß jeder Zapfen je einem Haken benachbart ausgebildet ist und jedes Auge in der Nähe einer der Nase ausgebildet ist.

4. Vorrichtung nach einem der vorstehenden Ansprüche, dadurch gekennzeichnet, daß das vordere Ende des Ringes (20) zu einem einwärts gerichteten Bogen (32) geformt ist, der einen Spiegelglasrand (34, 36) übergreift.

5. Vorrichtung nach einem der vorstehenden Ansprüche, dadurch gekennzeichnet, daß der Ring (20) über wenigstens einen biegbaren Steg (11, 13) an die Trägerplatte (1) einstückig angeformt ist.

## Claims

1. A device for fixing a mirror glass (30) to the front of a carrier plate (1), a plurality of first, spaced locking members (16 - 19) projecting from the rear of the carrier plate (1) connectable at its rear to the mirror casing of a motor vehicle exterior mirror, characterised in that a ring (20) is provided which surrounds the lateral edge (35) of the mirror glass (30) and has a plurality of second, spaced locking members (38), each second locking member (38) projecting radially from the ring (20) via a flexible connecting member (40) to cooperate with an associated first locking member (18).

2. A device according to claim 1, characterised in that a plurality of pins (6 - 9) project from the rear of the carrier plate (1) and in that a plurality of eyes (21 - 24), associated with the pins (6 - 9), are formed on the ring (20) so as to project radially via a connecting member (40).

3. A device according to claim 2, characterised in that each pin is formed adjacent to a hook and each eye is formed in proximity to one of the projections.

4. A device according to any one of the preceding claims, characterised in that the front end of the ring (20) forms an inward facing curve (32) engaging over an edge (34, 36) of the mirror glass.

5. A device according to any one of the preceding claims, characterised in that the ring (20) is formed in one piece with the carrier plate (1) via at least one flexible connecting member (11, 13).

## Revendications

1. Dispositif pour la fixation d'une glace réfléchissante (30) sur la face avant d'une plaque de support (1), de la face arrière de laquelle dépassent plusieurs premiers éléments de crantage espacés (16 ... 19) et qui, au niveau de sa face arrière, peut être reliée au boîtier de rétroviseur d'un rétroviseur extérieur de véhicule automobile, caractérisé en ce qu'il est prévu un anneau (20) entourant le bord extérieur (35) de la glace réfléchissante (30) et comportant plusieurs seconds éléments de crantage espacés (38), chaque second élément de crantage (38) dépassant radialement de l'anneau (20) par l'intermédiaire d'une patte flexible (40) pour coopérer avec un premier élément de crantage associé (18).

2. Dispositif selon la revendication 1, caractérisé en ce que plusieurs tétons (6 ... 9) dépassent de la face arrière de la plaque de support (1), et en ce que plusieurs oeillets (21 ... 24) associés aux tétons (6 ... 9) sont moulés sur l'anneau (20) dont ils dépassent chacun radialement par l'intermédiaire d'une patte (40).

3. Dispositif selon la revendication 2, caractérisé en ce que chaque téton se trouve à proximité d'un crochet et chaque oeillet se trouve à proximité de l'un des talons.

4. Dispositif selon l'une des revendications précédentes, caractérisé en ce que l'extrémité avant de l'anneau (20) est moulée sous la forme d'un arc (32) qui est dirigé vers l'intérieur et qui recouvre un bord (34, 36) de la glace réfléchissante.

5. Dispositif selon l'une des revendications précédentes, caractérisé en ce que l'anneau (20) est moulé en une seule pièce avec la plaque de support (1) par l'intermédiaire d'au moins une patte flexible (11, 13).
